# EUROPÄISCHE PATENTSCHRIFT

(11) **EP 1 657 424 B1**
(45) Veröffentlichungstag und Bekanntmachung des Hinweises auf die Patenterteilung: **29.02.2012**
(21) Anmeldenummer: 05022634.9
(22) Anmeldetag: 18.10.2005
(51) Int. Cl.: F02M 25/07, F16K 1/20

(54) **Abgasrückführvorrichtung für eine Verbrennungskraftmaschine**
Exhaust gas recirculation system for an internal combustion engine
Dispositif de recirculation de gaz d'échappement pour un moteur à combustion interne

(30) Priorität: 10.11.2004 DE 102004054164
(43) Veröffentlichungstag der Anmeldung: 17.05.2006
(73) Patentinhaber: Pierburg GmbH, 41460 Neuss (DE)
(72) Erfinder: Köster, Andreas, 45149 Essen (DE); Dismon, Heinrich, 53538 Gangelt (DE); Röttges, Riedel, 47918 Tönisvorst (DE); Haushälter, Peter, 41065 Mönchengladbach (DE)
(74) Vertreter: Patentanwälte ter Smitten Eberlein Rütten Partnerschaftsgesellschaft

(56) Entgegenhaltungen:
- EP-A1- 1 245 820
- EP-A1- 1 273 775
- EP-A1- 1 544 449
- EP-A2- 1 279 811
- DE-A1- 2 648 676
- DE-C1- 4 439 432
- DE-C1- 19 854 461
- FR-A- 1 241 293
- US-A- 4 300 506
- US-A1- 2003 234 378
- US-A1- 2004 177 839

## Beschreibung

Die Erfindung betrifft eine Abgasrückführvorrichtung für eine Verbrennungskraftmaschine mit einem in einem Abgasrückführkanal ausgebildeten Abgaseinlass und einem Abgasauslass sowie einem zwischen dem Abgaseinlass und dem Abgasauslass angeordneten Stellkörper, welcher in dem Abgasrückführkanal beweglich angeordnet ist und welcher zumindest indirekt mit einer Welle gekoppelt ist, die als exzentrische Drehachse dient und über eine Stellvorrichtung in Bewegung versetzbar ist, wodurch der Stellkörper gegen eine Sitzfläche, die im Abgasrückführkanal ausgebildet ist, und definiert von der Sitzfläche weg drehbar ist, wobei der Stellkörper in seiner den Abgasrückführkanal freigebenden Stellung im Wesentlichen parallel zur Strömungsrichtung im Abgasrückführkanal angeordnet ist.

Abgasrückführvorrichtungen für Verbrennungskraftmaschinen sind allgemein bekannt. Sie dienen zur Regulierung eines Abgasstromes vom Auslass zum Einlass eines Verbrennungsmotors, wodurch Schadstoffemissionen verringert werden. In den meisten bekannten Ausführungen werden hierzu Abgasrückführventile verwendet, bei denen ein Verschlußkörper über eine Ventilstange translatorisch von einem Ventilsitz abgehoben oder auf diesen geschoben wird.

Insbesondere bei Verbrennungskraftmaschinen mit Abgasturbolader sowie einer Ausführung mit Niederdruckteil und Hochdruckteil der Abgasrückführsysteme, wurden inzwischen Lösungen offenbart, bei denen die bekannten Abgasrückführventile durch Abgasrückführklappen ersetzt wurden.

So wird in der DE 198 54 461 C1 ein Verbrennungsmotor mit einer Abgasrückführvorrichtung beschrieben, bei der eine schwenkbar angeordnete Klappe als Absperrorgan in der Abgasrückführleitung dient. Diese ist in eine geöffnete Stellung schwenkbar, in der die Klappe parallel zur Abgasrückströmung angeordnet ist. Jedoch liegt diese Klappe weiterhin im durchströmten Bereich und bewirkt somit eine Querschnittsverengung, die zu einem Druckverlust führt, der bei den geringen Druckdifferenzen im Niederdruckteil eines Abgassystems vermieden werden sollte.

Des Weiteren wird durch die EP 1 273 775 A1 ein in einer Abgasrückführleitung angeordnetes Ventil offenbart, weiches als Umschaltventil dient, wobei zwischen einem Abgasdurchfluß in eine Abgasrückführleitung oder in ein Turbinenteil eines Abgasturboladers umgeschaltet werden kann. Dieses Umschaltventil ist ebenfalls klappenförmig und als Baueinheit mit dem Abgasturbolader ausgebildet. Die exzentrische Drehachse liegt radial außerhalb des Klappenkörpers, wobei der jeweils durchströmte Kanal in seinem Querschnitt nicht eingeengt wird, da das Ventil sich jeweils direkt an die Wandfläche des jeweiligen Kanals anlegt. Zur geregelten Abgasrückführung ist hier jedoch ein weiteres Abgasrückführventil zur Massenstromregelung notwendig.

Aus der EP 1 245 820 A1 ist ein Abgasrückführventil bekannt, dessen Klappenkörper über zwei bewegliche Wellenstümpfe in Drehung versetzbar ist. Die Wellenstümpfe sind axial versetzt zum Klappenkörper angeordnet.

Auch ist aus der DE 44 39 432 C1 eine Abgasklappe zur Erzeugung eines Abgasgegendrucks bekannt, welche ebenfalls drehbar in einem Kanal angeordnet ist, wobei auch hier die Stellwelle radial außerhalb des klappenförmigen Stellkörpers angeordnet ist. Die Stellwelle ist über einen Hebel mit dem Mittelpunkt des Klappenkörpers verbunden. Um einen vollständigen Verschluß der Abgasleitung in der geschlossenen Stellung zu gewährleisten, besteht des Weiteren eine kardanische Verbindung zwischen dem Verschlußkörper und dem Hebel. In Ihrer den Abgaskanal freigebenden Stellung ist auch diese Klappe parallel zur Wandfläche des Abgaskanals angeordnet. Eine mengenmäßige Regelung ist jedoch mit einer solchen Klappe nur sehr ungenau möglich.

All diesen Ausführungen ist jedoch gemeinsam, dass eine genaue mengenmäßige Regelung, ein dichter Verschluß in der geschlossenen Stellung und gleichzeitig die Vermeidung von Druckverlusten in der geöffneten Stellung nicht realisiert werden können.

Es ist daher Aufgabe der Erfindung, eine Abgasrückführvorrichtung zu schaffen, bei der die rückgeführte Abgasmenge möglichst genau, wie bei bekannten translatorisch bewegten Abgasrückführventilen, geregelt werden kann, wobei gleichzeitig ein großer durchströmbarer Querschnitt ohne Strömungshindernisse und somit hohe Abgasrückführraten in der Offenstellung und ein möglichst dichter Verschluß in der geschlossenen Stellung erreicht werden sollen. Zusätzlich soll der Stromverbrauch einer solchen Vorrichtung auf ein Minimum reduziert werden.

Diese Aufgaben werden dadurch gelöst, dass die Welle außerhalb des durchströmbaren Querschnitts des Abgasrückführkanals angeordnet ist, und dass eine Seitenmantelfläche des Stellkörpers, welche mit einer kegelstumpfförmigen Sitzfläche korrespondiert, kugelschnittförmig ausgebildet ist, wobei die Drehachse radial außerhalb des Umfangs des Stellkörpers angeordnet ist. Durch die Anordnung der Welle kann bei Drehbewegung der Welle in Offenstellung der durchströmte Querschnitt komplett geöffnet werden. Hierdurch wird eine Minimierung der Druckverluste durch Störkörper im durchströmten Querschnitt erreicht. Des Weiteren wird durch die Form der Sitzfläche und des Stellkörpers eine sehr gute Dichtwirkung zwischen Stellkörper und Sitzfläche im geschlossenen Zustand geschaffen, wobei gleichzeitig nur eine über den Umfang des Stellkörpers verlaufende linienförmige Berührungsfläche vorliegt, so dass eine Unempfindlichkeit bezüglich Verschmutzungen und Verklebungen erreicht wird. Eine Regelung des Durchsatzes insbesondere bei kleinen Öffnungswinkeln wird im Vergleich zu bekannten Ventilen deutlich verbessert.

In einer bevorzugten Ausführungsform ist im Abgasrückführkanal eine Ausnehmung ausgebildet, in die der Stellkörper in seiner den Abgasrückführkanal freigebenden Stellung derart schwenkbar ist, dass der durchströmte Querschnitt des Abgasrückführkanals im Wesentlichen konstant bleibt. Somit werden bei geöffnetem Querschnitt Strömungsverluste und Verwirbelungen im Bereich der Abgasrückführvorrichtung minimiert.

In einer bevorzugten Ausführungsform erfolgt die Bewegung des Stellkörpers beim Öffnen des Abgasrückführkanals in Richtung des Abgaseinlasses. Dies bedeutet, dass im geschlossenen Zustand der Abgasdruck derart auf den Stellkörper wirkt, dass dieser auf die Sitzfläche gedrückt wird. Somit muß die Stellvorrichtung bei geschlossenem Ventil nicht bestromt werden, wodurch Strom eingespart wird. Gleichzeitig wird hierdurch eine Fail-Safe-Funktion auf einfache Weise sichergestellt.

In einer weiterführenden Ausführungsform ist ein Hebel, dessen erstes Ende fest mit der Welle und dessen zweites Ende zumindest indirekt mit dem Stellkörper verbunden ist, an der zum Abgasauslass gelegenen Seite des Stellkörpers angeordnet, wodurch die Welle vorteilhafterweise bei geschlossenem Ventil nicht unter Abgaseinfluß steht. Dies reduziert Ablagerungen im Bereich der Stellwelle.

Des Weiteren kann die Verbindung zwischen Welle und Stellkörper durch einen Platenkörper hergestellt sein, was eine gute Stabilität und eine geringen Platzbedarf bewirkt. Zusätzlich werden hierdurch im teilweise geöffneten Zustand auftretende Verwirbelungen und somit eine Beeinflussung der Strömung durch die Aufhängung des Stellkörpers verringert.

In einer weiterführenden Ausführungsform ist der Hebel oder der Plattenkörper kippbeweglich oder kardanisch mit dem Stellkörper verbunden, wodurch Fertigungsungenauigkeiten bezüglich der Lage des Ventilsitzes zum Stellkörper ebenso wie Ungleichmäßigkeiten durch Verschmutzungen ausgeglichen werden können, so dass ein dichter Verschluss sichergestellt ist.

Eine weitere Verbesserung in der Regulierbarkeit des rückgeführten Abgasmassenstromes wird dadurch erreicht, dass eine Wandfläche des Abgaseinlasses derart geformt ist, dass bei Bewegungen des Stellkörpers aus der geschlossenen Stellung der freie durchströmbare Querschnitt zumindest bis zu einem Drehwinkel von 15°, vorzugsweise 30°, im Wesentlichen proportional zum Drehwinkel der Welle wächst. Beim Öffnen eines normalen Klappenventils würden bereits geringe Drehungen der Welle und somit des Stellkörpers vom Ventilsitz zu großen Durchsatzänderungen führen. Durch die Anpassung der Wandfläche insbesondere im am stärksten durchströmten Bereich am entgegengesetzten Ende des Stellkörpers zur Welle kann allerdings eine beinahe lineare Kennlinie für diesen Bereich erreicht werden.

Auf einfache Weise wird dies dadurch erreicht, dass die Wandfläche des Abgaseinlasses im zur Stellwelle gegenüberliegenden Bereich derart geformt ist, dass bei Bewegung des Stellkörpers aus der geschlossenen Stellung über einen Drehwinkel von zumindest 15°, vorzugsweise 30°, ein konstanter Spalt zwischen Wandfläche des Abgaseinlasses und dem Stellkörper besteht. Somit steht in diesem Bereich, der sonst Ursache für die größten Durchsatzänderungen ist, lediglich der gleiche durchströmbare Querschnitt zur Verfügung, so dass eine Linearität und somit eine sehr genaue Einstellung des Abgasmassenstromes auch bei kleinen Winkelgraden bei Öffnung des Stellkörpers erreicht wird, da eine Massenstromänderung nur über die zur Welle gerichteten Bereiche zwischen dem Stellkörper und der Wandfläche des Kanals erfolgt. In diesem Bereich bewirkt die Drehung des Stellkörpers aufgrund des geringen Abstandes zur Drehachse jedoch nur geringe Abstandsänderungen zwischen dem Außenumfang des Stellkörpers und der Wandfläche und somit auch nur kleine Änderungen des geöffneten Querschnitts.

Dieser Effekt ist insbesondere dann nutzbar, wenn sich der geformte Bereich des Abgaseinlasses in Umfangsrichtung zumindest über einen Winkelbereich von 30° erstreckt.

Eine derartige Abgasrückführvorrichtung ist besonders geeignet, um in einem Niederdruckteil eines Abgasrückführsystems angeordnet zu werden, da hier hohe Durchsatzmengen bei geringen Druckunterschieden gewünscht sind.

Eine erfindungsgemäße Abgasrückführvorrichtung eignet sich somit zum genauen Regeln der Absatzdurchsatzmengen, wobei gleichzeitig Druckverluste vermieden werden und der Stromverbrauch der verwendeten Stellvorrichtung reduziert wird. Gleichzeitig kann eine gute Dichtwirkung zwischen Stellkörper und Sitzfläche bei hoher Verschmutzungsunempfindlichkeit erreicht werden.

In den Figuren sind zwei erfindungsgemäße Ausführungsbeispiele dargestellt und werden nachfolgend beschrieben.
- Figur 1: zeigt eine Seitenansicht einer erfindungsgemäßen Abgasrück- führvorrichtung in teilweise geschnittener Darstellung.
- Figur 2: zeigt in Seitenansicht eine alternative Ausführung einer erfin- dungsgemäßen Abgasrückführvorrichtung in geschnittener Dar- stellung.

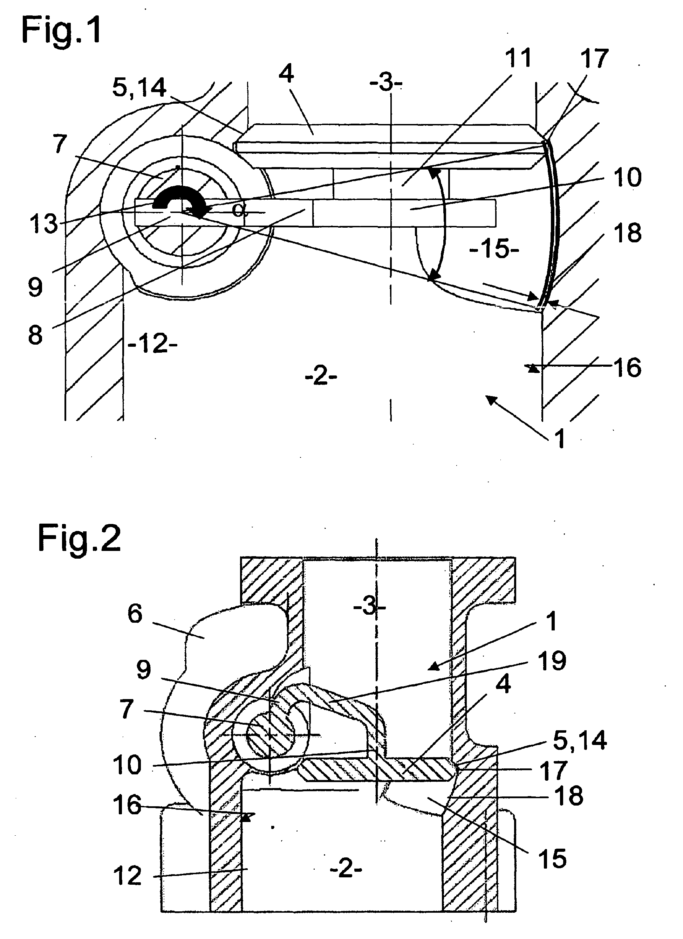

Die in den Figuren 1 und 2 dargestellten Abgasrückführvorrichtungen sind jeweils in einem Abgasrückführkanal 1 angeordnet, über welchen ein Abgasmassenstrom von einem Auslass einer Verbrennungskraftmaschine zu einem Einlass einer Verbrennungskraftmaschine durch Betätigen der Abgasrückführvorrichtung geregelt werden kann. Dies erfolgt über Änderung des freien durchströmbaren Querschnittes des Abgasrückführkanals 1.

Die Abgasrückführvorrichtungen bestehen jeweils aus einem Abgaseinlass 2 sowie einem Abgasauslass 3, zwischen denen ein Stellkörper 4 zur Änderung des freien durchströmbaren Querschnitts angeordnet ist. Dieser Stellkörper 4 steht in Wirkverbindung zu einer zwischen dem Abgaseinlass 2 und dem Abgasauslass 3 angeordneten Sitzfläche 5, gegen die der Stellkörper 4 in der den Rückführkanal 1 verschließenden Stellung anliegt. Die Betätigung des Stellkörpers 4 erfolgt über eine Stellvorrichtung 6, welche direkt oder indirekt mit einer Welle 7 verbunden ist, die in einer Gehäusefläche des Abgasrückführkanals 1 gelagert ist und als exzentrische und in radialer Richtung außerhalb des Stellkörpers 4 und des durchströmbaren Querschnitts des Abgasrückführkanals 1 angeordnete Drehachse dient.

Bei der in Figur 1 dargestellten Abgasrückführvorrichtung wird die Verbindung zwischen dem Stellkörper 4 und der Welle 7 durch einen Plattenkörper 8 hergestellt, der mit seinem ersten Ende 9 mit der Welle 7 und mit seinem zweiten Ende 10 über eine Stange 11, die auch mit einem kardanischen Verbindungselement versehen sein kann, mit dem Stellkörper 4 verbunden ist. Selbstverständlich wäre auch eine direkte Verbindung des Plattenkörpers 8 mit dem Stellkörper 4 denkbar.

Der Plattenkörper 8 ist in diesem Ausführungsbeispiel zum Abgaseinlass 2 gewandt, so dass in der Offenstellung des Stellkörpers 4 der Stellkörper 4 in eine nur teilweise dargestellte Ausnehmung 12 gedreht werden kann, wodurch der gesamte Querschnitt der Abgasrückführleitung 1 für den Abgasmassenstrom zur Verfügung steht und keine strömungsbehindernden oder wirbelbildenden Einbauten vorhanden sind. Entsprechend können große Rückführraten realisiert werden.

Ein Pfeil 13 zeigt die Drehrichtung des Stellkörpers 4 an, welche ebenfalls in Richtung zum Abgaseinlass 2 angeordnet ist. Dies bedeutet, dass der

Stellkörper 4 in den Abgaseinlass 2 geschwenkt wird, wenn die Abgasrückführvorrichtung geöffnet wird. Somit entsteht eine erhöhte Dichtwirkung im geschlossenen Zustand, ohne dass eine Bestromung der Stellvorrichtung 6 notwendig wäre, da der Stellkörper 4 durch das anliegende Druckgefälle gegen die Sitzfläche 5 gedrückt wird.

Des Weiteren ist ersichtlich, dass die Sitzfläche 5 kegelstumpfförmig ausgebildet ist, während eine mit der Sitzfläche 5 korrespondierende Seitenmantelfläche 14 des Stellkörpers 4 kugelschnittförmig ausgebildet ist. Hierdurch entsteht einerseits eine gute Regelbarkeit des Abgasmassenstromes auch bei kleinen Drehwinkeln des Stellkörpers 4 aus der geschlossenen Stellung, andererseits wird die Berührungsfläche im geschlossenen Zustand zwischen Stellkörper 4 und Sitzfläche 5 minimiert, da aufgrund der unterschiedlichen Formen lediglich eine Linienberührung stattfindet.

Die gute Regulierbarkeit des Abgasmassenstromes wird durch einen geformten Bereich 15 verstärkt, der in einer Wandfläche 16 des Abgasrückführkanals 1 ausgebildet ist. Dieser geformte Bereich 15 ist so ausgeführt, dass zwischen einem in radialer Richtung gegenüber zur Welle 7 angeordneten Außenumfang 17 des Stellkörpers 4 und der Wandfläche 16 des Abgasrückführkanals 1 ein konstanter Spalt 18 entsteht. Dieser konstante Spalt 18 wird über einen Drehwinkel α von ca. 30° aus der geschlossenen Stellung des Stellkörpers 4 zwischen dem Außenumfang 17 des Stellkörpers 4 und der Wandfläche 14 aufrecht erhalten. Der geformte Bereich 15 erstreckt sich im vorliegenden Ausführungsbeispiel in Umfangsrichtung der Wandfläche 16 des Abgaseinlasses 2 über einen Winkel von etwa 100° im zur Welle 7 gegenüberliegenden Bereich 15. Durch diese Maßnahmen wird über etwa ein Drittel des zur Verfügung stehenden Stellbereiches eine annähernd lineare Kennlinie erreicht, wobei in der Endstellung des Stellkörpers 4 im linearen Bereich, also bei einem Stellwinkel von 30°, beispielsweise etwa ein Fünftel bis ein Viertel des insgesamt möglichen Massenstromes den Abgasrückführkanal 1 durchströmt. Daraus folgt, dass insbesondere bei kleineren Abgasrückführraten, also im kritischen Drehwinkelbereich, eine sehr genaue Einstellung möglich ist. Im Gegensatz hierzu tritt bei einfachen Klappenventilen bei Drehung aus der geschlossenen Stellung im Bereich der erste Winkelgrade eine hohe Durchsatzveränderung im Vergleich zu Drehwinkeln über 30° auf, so dass eine Regelung bei kleinen Stellwinkeln nur schwer möglich ist. Durch Beibehaltung des konstanten Spaltes 18 über die ersten 30° im Bereich des die stärksten Querschnittsänderungen hervorrufenden Umfangsbereichs, nämlich dem von der Stellwelle 7 abgewandten Teil des Abgaseinlasses 2, erfolgt eine Querschnittsveränderung nur durch den sich langsam vom Ventilsitz abhebenden, zur Stellwelle weisenden Bereich des Stellkörpers 4.

Die in Figur 2 dargestellte Abgasrückführvorrichtung weist im Vergleich zu der vorbeschriebenen insbesondere den Unterschied auf, dass statt des Plattenkörpers 8 ein Hebel 19 verwendet wird, welcher im Bereich des Abgasauslasses 3 angeordnet ist. Durch eine derartige Anordnung wird auch die Welle 7 aus dem in Strömungsrichtung gesehen vor dem Stellkörper 4 liegenden Bereichs, in den Bereich hinter dem Stellkörper 4 verschoben, wodurch bei geschlossener Abgasrückführvorrichtung die Drehwelle 7 nicht unter Abgaseinfluß steht. Selbstverständlich ist auch eine solche Ausführung mit einem Plattenkörper 8 denkbar, wie auch die Ausführung aus Figur 1 mit einem Hebel gemäß der Figur 2 ausgestattet werden kann. Die Vorteile der guten Regulierbarkeit und Verschmutzungsunempfindlichkeit durch die Formgebung der Sitzfläche 5 und der Seitenmantelfläche 14 des Stellkörpers 4 sind in dieser Ausführung ebenso enthalten wie der konstante Spalt 18.

Es wird somit eine Abgasrückführvorrichtung geschaffen, bei der hohe Durchsätze bei relativ geringen Abmessungen des Abgasrückführkanals im Vergleich zu bekannten Abgasrückführventilen erreichbar sind. Gleichzeitig eignet sich eine derartige Abgasrückführvorrichtung für den Niederdruckteil eines Abgasrückführsystems einer Verbrennungskraftmaschine mit Abgasturboaufladung, bei der nur eine geringe Druckdifferenz zum Abgastransport zur Verfügung steht. Durch die erfindungsgemäßen Abgasrückführvorrichtungen werden weitere Strömungsverluste durch im freien Querschnitt liegende Einbauten zuverlässig vermieden.

Eine Regelung des Abgasstromes ist auch für geringe Abgasrückführraten mit hoher Präzision möglich, da eine im Wesentlichen lineare Kennlinie für den geformten Bereich erreichbar ist.

Es sollte klar sein, dass verschiedene Modifikationen bezüglich der Bauweise der Vorrichtung, insbesondere der Anordnung des Hebels zum Plattenkörper oder der Form der Ausnehmung, in die der Plattenkörper drehbar ist, möglich sind. Auch ist es sicherlich möglich, auf andere Art und Weise als mit dem dargestellten konstanten Spalt eine lineare Kennlinie zu erreichen. Dies ließe beispielsweise durch eine über den gesamten Umfang ausgeführte konstante Querschnittserweiterung über den Drehwinkel verwirklichen, wobei der Bearbeitungsaufwand in einem solchen Fall relativ hoch wäre. Auch eine Ausführung, bei der der Stellkörper in Richtung zum Abgasauslass bewegt wird, ist denkbar, und fällt in den Schutzbereich des Hauptanspruches. Zur Verstellung der Welle können beispielsweise elektrische Stellvorrichtungen, bei denen die Welle über einen Elektromotor und ein zwischen Elektromotor und Welle geschaltetes Getriebe bewegt wird, realisiert werden.

## Patentansprüche

1. Abgasrückführvorrichtung für eine Verbrennungskraftmaschine mit einem in einem Abgasrückführkanal (1) ausgebildeten Abgaseinlass (2) und einem Abgasauslass (3) sowie einem zwischen dem Abgaseinlass (2) und dem Abgasauslass (3) angeordneten Stellkörper (4), welcher in dem Abgasrückführkanal (1) beweglich angeordnet ist und welcher zumindest indirekt mit einer Welle (7) gekoppelt ist, die als exzentrische Drehachse dient und über eine Stellvorrichtung (6) in Bewegung versetzbar ist, wodurch der Stellkörper (4) gegen eine Sitzfläche (5), die im Abgasrückführkanal (1) ausgebildet ist, und definiert von der Sitzfläche (5) weg drehbar ist, wobei der Stellkörper (4) in seiner den Abgasrückführkanal (1) freigebenden Stellung im Wesentlichen parallel zur Strömungsrichtung im Abgasrückführkanal (1) angeordnet ist, **dadurch gekennzeichnet, dass** die Welle (7) außerhalb des durchströmbaren Querschnitts des Abgasrückführkanals (1) angeordnet ist, und dass eine Seitenmantelfläche (14) des Stellkörpers (4), welche mit einer kegelstumpfförmigen Sitzfläche (5) korrespondiert, kugelschnittförmig ausgebildet ist, wobei die Drehachse radial außerhalb des Umfangs des Stellkörpers (4) angeordnet ist.

2. Abgasrückführvorrichtung für eine Verbrennungskraftmaschine nach Anspruch 1, **dadurch gekennzeichnet, dass** im Abgasrückführkanal (1) eine Ausnehmung (12) ausgebildet ist, in die der Stellkörper (4) in seiner den Abgasrückführkanal (1) freigebenden Stellung derart schwenkbar ist, dass der durchströmte Querschnitt des Abgasrückführkanals (1) im Wesentlichen konstant bleibt.

3. Abgasrückführvorrichtung für eine Verbrennungskraftmaschine nach Anspruch 1 oder 2, **dadurch gekennzeichnet, dass** die Bewegung des Stellkörpers (4) beim Öffnen des Abgasrückführkanals (1) in Richtung zum Abgaseinlass (2) erfolgt.

4. Abgasrückführvorrichtung für eine Verbrennungskraftmaschine nach Anspruch 3, **dadurch gekennzeichnet, dass** ein Hebel (19), dessen erstes Ende (9) fest mit der Welle (7) und dessen zweites Ende (10) zumindest indirekt mit dem Stellkörper (4) verbunden ist, an der zum Abgasauslass (3) gelegenen Seite des Stellkörpers (4) angeordnet ist.

5. Abgasrückführvorrichtung für eine Verbrennungskraftmaschine nach einem der vorhergehenden Ansprüche, **dadurch gekennzeichnet, dass** die Verbindung zwischen Welle (7) und Stellkörper (4) durch einen Plattenkörper (8) hergestellt ist.

6. Abgasrückführvorrichtung für eine Verbrennungskraftmaschine nach einem der vorhergehenden Ansprüche, **dadurch gekennzeichnet, dass** der Hebel (19) oder der Plattenkörper (8) kippbeweglich oder kardanisch mit dem Stellkörper (4) verbunden ist.

7. Abgasrückführvorrichtung für eine Verbrennungskraftmaschine nach einem der vorhergehenden Ansprüche, **dadurch gekennzeichnet, dass** eine Wandfläche (16) des Abgaseinlasses (2) derart geformt ist, dass bei Bewegung des Stellkörpers (4) aus der geschlossenen Stellung der freie durchströmbare Querschnitt zumindest bis zu einem Drehwinkel α von 15°, vorzugsweise 30°, im Wesentlichen proportional zum Drehwinkel α der Welle (7) wächst.

8. Abgasrückführvorrichtung für eine Verbrennungskraftmaschine nach einem der vorhergehenden Ansprüche, **dadurch gekennzeichnet, dass** die Wandfläche (16) des Abgaseinlasses (2) im zur Welle (7) gegenüberliegenden Bereich (15) derart geformt ist, dass bei Bewegung des Stellkörpers (4) aus der geschlossenen Stellung über einen Drehwinkel α von zumindest 15°, vorzugsweise 30°, ein konstanter Spalt (18) zwischen Wandfläche (16) des Abgaseinlasses (2) und Außenumfang (17) des Stellkörpers (4) besteht.

9. Abgasrückführvorrichtung für eine Verbrennungskraftmaschine nach Anspruch 8, **dadurch gekennzeichnet, dass** sich der geformte Bereich (15) des Abgaseinlasses (2) in Umfangsrichtung des Stellkörpers (4) zumindest über einen Winkelbereich von 30° erstreckt.

10. Abgasrückführvorrichtung für eine Verbrennungskraftmaschine nach einem der vorhergehenden Ansprüche, **dadurch gekennzeichnet, dass** die Abgasrückführvorrichtung in einem Niederdruckteil eines Abgasrückführsystems angeordnet ist.

## Claims

1. Exhaust recirculation device for an internal combustion engine comprising an exhaust inlet (2) formed in an exhaust recirculation channel (1) and an exhaust outlet (3), as well as a control element (4) arranged between the exhaust inlet (2) and the exhaust outlet (3), which control element is arranged for movement in the exhaust recirculation channel (1) and which is at least indirectly coupled to a shaft (7) which serves as an eccentric axis of rotation and is adapted to be moved through a control device (6), whereby the control element (4) can be rotated against a seat surface (5), formed in the exhaust recirculation channel (1), and can be rotated away from the seat surface (5) in a defined manner, wherein said control element (4), when in its position opening the exhaust recirculation channel (1), is arranged substantially parallel to the flow direction in the exhaust gas recirculation channel (1), **characterized in that** the shaft (7) is arranged outside the flow-through cross section of the exhaust recirculation channel (1), and that a lateral shell surface (14) of the control element (4), which is correspondent to a frustoconical seat surface (5), is formed in a spherical section shape, wherein the rotational axis is arranged radially outside the circumference of the control element (4).

2. Exhaust recirculation device for an internal combustion engine of claim 1, **characterized in that** the exhaust recirculation channel (1) is formed with a recess (12) into which the control element (4), when in its position opening the exhaust recirculation channel (1), can be pivoted such that the cross section of the exhaust recirculation channel (1) flown through remains substantially constant.

3. Exhaust recirculation device for an internal combustion engine of claim 1 or 2, **characterized in that** the movement of the control element (4) is directed towards the exhaust inlet (2) when the exhaust recirculation channel (1) is opened.

4. Exhaust recirculation device for an internal combustion engine of claim 3, **characterized in that** a lever (19) is arranged on the side of the control element (4) facing the exhaust outlet (3), a first end (9) of said lever being rigidly connected to the shaft (7) and a second end (10) thereof being connected at least indirectly to the control element (4).

5. Exhaust recirculation device for an internal combustion engine of one of the preceding claims, **characterized in that** the connection between the shaft (7) and the control element (4) is made by a plate element (8).

6. Exhaust recirculation device for an internal combustion engine of one of the preceding claims, **characterized in that** the lever (19) or the plate element (8) is connected to the control element (4) in a pivotable or gimbaled manner.

7. Exhaust recirculation device for an internal combustion engine of one of the preceding claims, **characterized in that** a wall surface (16) of the exhaust inlet (2) is formed such that when the control element (4) is moved from the closed position, the free flow-through cross section increases, at least to an angle of rotation a of 15°, preferably 30°, in proportion to an angle of rotation a of the shaft (7).

8. Exhaust recirculation device for an internal combustion engine of one of the preceding claims, **characterized in that** the wall surface (16) of the exhaust inlet (2) is formed such in the region (15) opposite the shaft (7) that, when the control element (4) is moved from the closed position through an angle of rotation a of at least 15°, preferably 30°, a constant gap (18) exists between the wall surface (16) of the exhaust inlet (2) and the outer circumference (17) of the control element (4).

9. Exhaust recirculation device for an internal combustion engine of claim 6, **characterized in that** the shaped region (15) of the exhaust inlet (2) extends at least through an angular range of 30° in the circumferential direction of the control element (4).

10. Exhaust recirculation device for an internal combustion engine of one of the preceding claims, **characterized in that** the exhaust recirculation is arranged in a low-pressure portion of an exhaust recirculation system.

## Revendications

1. Dispositif de récirculation de gaz d'échappement d'un moteur à combustion interne comprenant une entrée de gaz d'échappement (2) formée dans un canal de récirculation de gaz d'échappement (1) et une sortie de gaz d'échappement (3), ainsi qu'un élément de réglage (4) disposé entre ladite entrée de gaz d'échappement (2) et ladite sortie de gaz d'échappement (3), ledit élément étant disposé de manière mobile dans ledit canal de récirculation de gaz d'échappement (1) et couplé au moins indirectement à un arbre (7) qui sert comme axe de rotation excentrique et qui est apte à être mu par un dispositif de réglage (6), ce qui permet de tourner ledit élément de réglage (4) contre une surface de siège (5), formée dans ledit canal de récirculation de gaz d'échappement (1), et de tourner ledit élément dans la direction opposée à ladite surface de siège (5) de manière définie, ledit élément de réglage (4), dans sa position de déblocage dudit canal de récirculation de gaz d'échappement (1), étant disposé sensiblement parallèle à la direction d'écoulement dans ledit canal de récirculation de gaz d'échappement (1), **caractérisé en ce que** ledit arbre (7) est disposé hors de la section transversale dudit ledit canal de récirculation de gaz d'échappement (1) pouvant être parcourue, et qu'une surface d'enveloppe latérale (14) dudit élément de réglage (4), correspondant à une surface de siège (5) tronconique, est formée en section sphérique, ledit axe de rotation étant disposé radialement à l'extérieur de la circonférence extérieure dudit élément de réglage (4).

2. Dispositif de récirculation de gaz d'échappement d'un moteur à combustion interne selon la revendication 1, **caractérisé en ce qu'**un renfoncement (12) est formé dans ledit canal de récirculation de gaz d'échappement (1), sans lequel ledit élément de réglage (4), dans sa position de déblocage dudit canal de récirculation de gaz d'échappement (1), peut être pivoté de sorte que la section transversale parcourue dudit canal de récirculation de gaz d'échappement (1) reste sensiblement constante.

3. Dispositif de récirculation de gaz d'échappement d'un moteur à combustion interne selon les revendications 1 ou 2, **caractérisé en ce que**, lors du déblocage dudit canal de récirculation de gaz d'échappement (1), ledit élément de réglage (4) est déplacé dans la direction de ladite entrée de gaz d'échappement (2).

4. Dispositif de récirculation de gaz d'échappement d'un moteur à combustion interne selon la revendication 3, **caractérisé en ce qu'**un levier (19) est disposé au côté dudit élément de réglage (4) face à ladite sortie de gaz d'échappement (3), la première extrémité (9) dudit levier étant solidaire de l'arbre (7) et la deuxième extrémité (10) étant au moins indirectement liée audit élément de réglage (4).

5. Dispositif de récirculation de gaz d'échappement d'un moteur à combustion interne selon l'une quelconque des revendications précédentes, **caractérisé en ce que** la liaison entre l'arbre (7) et l'élément de réglage (4) est réalisée par un élément de plaque (8).

6. Dispositif de récirculation de gaz d'échappement d'un moteur à combustion interne selon l'une quelconque des revendications précédentes, **caractérisé en ce que** ledit levier (19) ou ledit élément de plaque (8) est lié audit élément de réglage (7) de manière basculante ou à cardan.

7. Dispositif de récirculation de gaz d'échappement d'un moteur à combustion interne selon l'une quelconque des revendications précédentes, **caractérisé en ce qu'**une surface de paroi (16) de ladite entrée de gaz d'échappement (2) est formée de sorte que, lors d'un mouvement dudit élément de réglage (4) de la position de fermeture, la section transversale libre pouvant être parcourue augmente sensiblement proportionnellement à l'angle de rotation a de l'arbre (7), au moins jusqu'à un angle de rotation a de 15°, de préférence 30°.

8. Dispositif de récirculation de gaz d'échappement d'un moteur à combustion interne selon l'une quelconque des revendications précédentes, **caractérisé en ce que** ladite surface de paroi (16) de ladite entrée de gaz d'échappement (2) est façonnée dans la partie (15) opposée à l'arbre (7) de sorte que, lors du mouvement dudit élément de réglage (4) de la position de fermeture, une fente constante (18) existe sur un angle rotation a d'au moins 15°, de préférence 30°, entre ladite surface de paroi (16) de ladite entrée de gaz d'échappement (2) et la circonférence extérieure (17) dudit élément de réglage (4).

9. Dispositif de récirculation de gaz d'échappement d'un moteur à combustion interne selon la revendication 8, **caractérisé en ce que** la partie (15) façonnée de ladite entrée de gaz d'échappement (2) s'étend dans la direction circonférentielle dudit élément de réglage (4) au moins sur une plage angulaire de 30°.

10. Dispositif de récirculation de gaz d'échappement d'un moteur à combustion interne selon l'une quelconque des revendications précédentes, **caractérisé en ce que** ledit dispositif de récirculation de gaz d'échappement est disposé dans une partie à basse pression d'un système de récirculation de gaz d'échappement.
